# EUROPÄISCHE PATENTANMELDUNG

(11) **EP 2 500 207 A2**
(43) Veröffentlichungstag der Anmeldung: **19.09.2012**
(21) Anmeldenummer: 12152394.8
(22) Anmeldetag: 25.01.2012
(51) Int. Cl.: B60L 11/18, H02J 7/00

(54) **Fahrzeug mit elektrischem Antrieb und Energiespeicher**

(30) Priorität: 17.02.2011 DE 102011011620; 14.03.2011 DE 102011013837
(71) Anmelder: STILL GmbH, 22113 Hamburg (DE)
(72) Erfinder: Kwiatkowski, Dr. Andreas, 22083 Hamburg (DE); Wilhöft, Adolf, 22885 Barsbüttel (DE); Rudolph, Dr. Christian, 21075 Hamburg (DE); Osper, Gerald, 22147 Hamburg (DE)
(74) Vertreter: Geirhos, Johann

(57) **Zusammenfassung**

Die Erfindung betrifft ein Fahrzeug mit einem zumindest auch elektrischen Antrieb, insbesondere Hybridantrieb, mit einem elektrischen Energiespeicher (17) der eine Mehrzahl von Ultrakondensatoren (35) aufweist, die als ein Modul (44) in ein Gehäuse (25) integriert sind, wobei der elektrische Energiespeicher (17) aus einer Mehrzahl von Modulen (44) gebildet ist, die parallel oder in Reihe geschaltet sind.

## Beschreibung

Die Erfindung betrifft ein Fahrzeug mit einem zumindest auch elektrischen Antrieb, insbesondere Hybridantrieb, mit einem elektrischen Energiespeicher der eine Mehrzahl von Ultrakondensatoren aufweist, die als ein Modul in ein Gehäuse integriert sind.

Bekannt sind als Flurförderzeuge, insbesondere Gegengewichtsgabelstapler, ausgebildete mobile Arbeitsmaschinen, die mit einem batterie-elektrisch betriebenen Antriebssystem, auch als Batteriestapler bezeichnet, und mit einem verbrennungsmotorischen Antriebssystem ausgestattet sind, auch als Verbrennungsmotorstapler bezeichnet.

Bei verbrennungsmotorisch betriebenen Flurförderzeugen kann für den Fahrantrieb eine mechanische Leistungsübertragung mit einem hydrodynamischen Wandlergetriebe oder einem hydrostatischen Getriebe vorgesehen sein. Darüber hinaus ist bei verbrennungsmotorisch betriebenen Flurförderzeugen eine elektrische Leistungsübertragung für den Fahrantrieb bekannt, bei der ein von dem Verbrennungsmotor, z.B. einem Dieselmotor, angetriebener Generator einen elektrischen Zwischenkreis speist, aus dem ein Fahrantriebsmotor gespeist wird. In der Regel ist der Fahrantriebsmotor ein Drehstrommotor, beispielsweise ein Asynchronmotor, der über einen Umrichter aus dem Zwischenkreis gespeist wird.

Ein solches verbrennungsmotorisch-elektrisches Flurförderzeug bietet einfache Voraussetzungen, um einen elektrischen Energiespeicher, z.B. zum Speichern der Bremsenergie, zu integrieren. Über einen Gleichspannungswandler, der einen beliebig stellbaren, bidirektionalen elektrischen Leistungsfluss trotz unterschiedlicher Spannungspotentiale des Zwischenkreises und des elektrischen Energiespeichers ermöglicht, wird eine Verbindung zwischen dem Zwischenkreis des Fahrantriebs und dem elektrischen Energiespeicher hergestellt. Der elektrische Energiespeicher kann z.B. aus Ultrakondensatoren oder Batterien bestehen.

Flurförderzeuge mit einem zuvor beschriebenen verbrennungsmotorisch-elektrischen Antriebssystem mit einem zusätzlichen elektrischen Energiespeicher können auch auf einfache Weise als hybride Flurförderzeuge betrieben werden, indem bei hohem Leistungsbedarf zusätzlich zu dem Verbrennungsmotor beispielsweise zur Versorgung des Fahrantriebsmotors oder über den als Motor betriebenen Generator zur Unterstützung des Verbrennungsmotors beim Antrieb von weiteren Aggregaten, beispielsweise einer die Arbeitshydraulik versorgenden Hydraulikpumpe, elektrische Energie dem elektrischen Energiespeicher entnommen wird. Der Verbrennungsmotor kann dann entsprechend in der Leistung kleiner ausgelegt werden.

Mit einem zusätzlichen elektrischen Energiespeicher kann ebenfalls ein Flurförderzeug mit einem verbrennungsmotorischen Antriebssystem und einem hydrostatischen Fahrantrieb oder hydrodynamischen Fahrantrieb als hybrides Fahrzeug ausgebildet werden, wenn als elektrischer Antrieb ein zusätzlicher Elektromotor als Fahrmotor oder zur Unterstützung des Verbrennungsmotors eingesetzt wird.

Als elektrischer Energiespeicher eignet sich insbesondere bei kurzen Fahrzyklen ein Ultrakondensatoren bzw. Doppelschichtkondensatoren nutzender Energiespeicher. Da die Ultrakondensatoren nur eine max. Zellenspannung von ca. 2,7 V zulassen, müssen mehrere Ultrakondensatoren in Reihe geschaltet werden, um einen geeigneten elektrischen Energiespeicher zu erhalten.

Bei Flurförderzeugen stellt sich jedoch das zusätzliche Problem, dass es verschiedene Gewichtsklassen von Fahrzeugen gibt, die auch unterschiedlich viel Bauraum für die Unterbringung des elektrischen Energiespeichers zur Verfügung stellen. Dies bedeutet, dass z.B. für jede Gewichtsklasse eines Gegengewichtgabelstaplers als Flurförderzeug ein eigener elektrischer Energiespeicher entwickelt und produziert werden muss, der genau für die Bauraumverhältnisse und die Leistungsanforderungen ausgelegt ist. Durch die Aufteilung in verschiedene Gewichtsklassen werden dann aber die Stückzahlen erheblich vermindert und gehen wirtschaftliche Vorteile einer großen Stückzahl verloren.

Die genannten Probleme stellen sich auch ganz allgemein bei Fahrzeugen, mit zumindest auch elektrischem Antrieb, insbesondere Hybridantrieb.

Der vorliegenden Erfindung liegt daher die Aufgabe zugrunde, ein Fahrzeug mit elektrischem Antrieb und Energiespeicher und insbesondere ein System aus Fahrzeugen und elektrischen Energiespeichern zur Verfügung zu stellen, mit denen auf kostengünstige Weise und mit geringem Entwicklungsaufwand eine Anpassung an unterschiedliche Leistungsanforderungen bei den Fahrzeugen erfolgen kann.

Diese Aufgabe wird durch ein Fahrzeug mit einem zumindest auch elektrischen Antrieb, insbesondere Hybridantrieb, mit den Merkmalen des Anspruchs 1 sowie durch ein System aus mindestens zwei solcher Fahrzeuge mit den Merkmalen des Anspruchs 11 gelöst. Vorteilhafte Weiterbildungen werden in den Unteransprüchen angegeben.

Die Aufgabe wird durch ein Fahrzeug mit einem zumindest auch elektrischen Antrieb, insbesondere Hybridantrieb, mit einem elektrischen Energiespeicher gelöst, der eine Mehrzahl von Ultrakondensatoren aufweist, die als ein Modul in ein Gehäuse integriert sind. Erfindungsgemäß ist der elektrische Energiespeicher aus einer Mehrzahl von Modulen gebildet, die parallel oder in Reihe geschaltet sind.

Dadurch kann auf sehr einfache Weise die Leistung des elektrischen Energiespeichers an die Erfordernisse angepasst werden. Vor allem kann eine große Anzahl völlig baugleicher Module eingesetzt werden. Dadurch ergeben sich wirtschaftlich günstige große Stückzahlen. Es können z.B. mehrere, insbesondere vier, Module in Reihe geschaltet werden.

Vorteilhaft ist das Fahrzeug eine mobile Arbeitsmaschine, insbesondere ein Flurförderzeug.

In einer vorteilhaften Ausgestaltung der Erfindung weist jedes Modul eine Kodierung auf, insbesondere keine, eine oder zwei Kodierungsbrücken, die in dem Kabelsatz der Anschlusskabel integriert sind.

Durch die Kabelbrücken ist es im verbauten Zustand möglich, die Fehlermeldungen einzelnen Module genau zuzuordnen, so daß z.B. bei Reparaturen genau erkennbar ist, welches Modul im Fehlerfall zu tauschen ist.

In einer Weiterbildung der Erfindung weist jedes Modul ein Schütz bzw. Schalter auf, der über eine Steuerleitung und/oder ein Steuersignal geschaltet werden kann und einen Leistungsanschluss des Moduls trennen kann.

Dadurch können die Gefahren durch die im geladenen Zustand hohe Energiedichte des mit Ultrakondensatoren ausgestatten Moduls vermieden werden. Dabei kann jedes Modul in beliebiger Position im Fahrzeug verbaut werden. Durch das Schütz wird erreicht, dass das Modul, der elektrische Energiespeicher als ganzes, wie auch das Fahrzeug bei Kurzschlüssen geschützt sind.

Jedes Modul kann einen Controller enthalten, der Funktionsparameter der Ultrakondensatoren wie Temperatur und/oder Spannung und/oder Ströme erfasst.

In einer günstigen Ausgestaltung der Erfindung kann der Controller bei erfassten Kurzschlüssen und/oder Überschreiten von zulässigen Grenzwerten für Temperatur und/oder Spannung und/oder Ströme der Ultrakondensatoren das Modul abschalten.

Es kann in jedes Modul ein Datenbus-Controller, insbesondere ein CAN-Controller integriert sein und über diesen können Funktionsparameter ausgelesen sowie Steuerbefehle empfangen werden und/oder es kann eine Kodierung des Moduls erfolgen.

Dies ermöglicht bei, einer selbständigen Erkennung des Betriebszustands sowie Erkennung von Fehlerzuständen dem Fahrzeugsystem über die CAN-Schnittstelle entsprechende Informationen zu übergeben.

Durch eine zusätzliche Spannungsversorgung über z.B. die Starterbatterie des Fahrzeugs können die Steuerungsfunktionen von Controllern unabhängig sein von der Schaltung des Schütz und/oder dem Ladungszustand der Ultrakondensatoren. Beim Abstellen des Fahrzeugs kann die Temperatur der Ultrakondensatoren weiter überwacht werden, wenn eine Nachlauffunktion zur Überwachung der Temperatursensoren, weiterer Funktionsparameterwerte, oder zur Ansteuerung eines Kühllüfters für die Kühlung der Module vorgesehen wird.

Vorteilhaft sind die Ultrakondensatoren Doppelschichtkondensatoren.

Die Aufgabe wird auch durch ein System aus mindestens zwei zuvor beschriebenen Fahrzeugen gelöst, wobei die Fahrzeuge unterschiedlich sind hinsichtlich der Leistungsanforderungen an den elektrischen Energiespeicher und der elektrische Energiespeicher eine von der erforderlichen Leistung abhängige Anzahl von Modulen aufweist.

Für unterschiedliche Fahrzeuge oder aber auch unterschiedliche Auslegungen etwa eines Hybridantriebes kann somit mit gleichen Bauteilen leicht und kostengünstig eine Anpassung des elektrischen Energiespeichers erfolgen. Durch die schnelle Integrierbarkeit der Module in das Fahrzeug, die nur in Reihe geschaltet eingebaut werden müssen, wird eine schnelle Anpassung an neue Fahrzeugtypen möglich.

In vorteilhafter Gestaltung der Erfindung sind die Fahrzeuge Flurförderzeuge, insbesondere Gegengewichtsgabelstapler, die sich in dem Leergewicht und zulässigen Lastgewicht unterscheiden.

Vor allem bei Gegengewichtsgabeistaplern ergeben sich große Unterschiede in den Fahrzeuggewichten, insbesondere bei Beladung. Es kann vorteilhaft eine Anpassung auf einfache Weise an die unterschiedlichen Fahrzeuge erfolgen. Auch ist eine Anpassung an unterschiedliche Auslegungen eines Hybridantriebs möglich. Gerade bei Flurförderzeugen ergeben sich durch unterschiedliche Betriebs- und Einsatzbedingungen voneinander abweichende Anforderungen an die Speicherkapazität des elektrischen Energiespeichers.

Weitere Vorteile und Einzelheiten der Erfindung werden anhand der in den schematischen Figuren dargestellten Ausführungsbeispiele näher erläutert. Hierbei zeigt:
- Fig. 1: einen verbrennungsmotorisch-elektrischen Antriebsstrang für ein als Flurförderzeug ausgebildetes erfindungsgemäßes Fahrzeug mit einem elektrischen Energiespeicher in einer schematischen Darstellung,
- Fig. 2: eine schematische Darstellung des verbrennungsmotorisch-elektrischen Antriebsstrang für das Fahrzeug der Fig. 1,
- Fig. 3: in perspektivischer Ansicht der aus zwei Modulen bestehende elektrische Energiespeicher der Fig. 1 und
- Fig. 4: ein Schaltbild eines Moduls des elektrischen Energiespeichers.

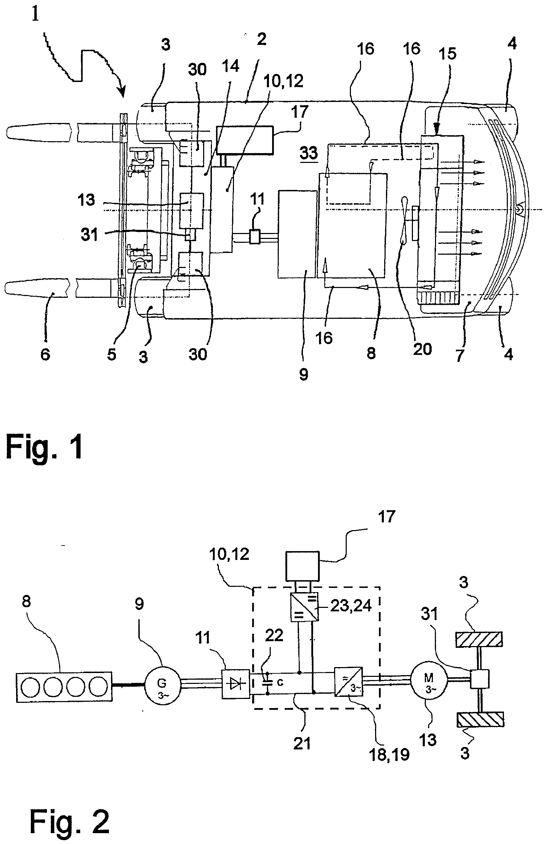

In der Fig. 1 ist ein verbrennungsmotorisch-elektrisch angetriebenes Flurförderzeug 1 in Form eines Gegengewichtsgabelstaplers als Beispiel eines erfindungsgemäßen Fahrzeugs mit zumindest auch elektrischem Antrieb in einer Aufsicht mit den wesentlichen Aggregaten des Antriebs und einem elektrischen Energiespeicher 17 dargestellt.

Das Flurförderzeug 1 weist einen Fahrzeugrahmen 2 auf, der im lastzugewandten Bereich mit zwei Antriebsrädern 3 und im lastabgewandten Bereich mit gelenkten Rädern 4 versehen ist. Am vorderen lastzugewandten Bereich des Flurförderzeugs 1 ist ein Hubgerüst 5 angeordnet, an dem ein als Lastgabel ausgebildetes Lastaufnahmemittel 6 auf- und abbewegbar angeordnet ist. Im lastabgewandten Bereich ist das Flurförderzeug 1 mit einem Gegengewicht 7 versehen.

Das Flurförderzeug 1 ist mit einem verbrennungsmotorisch-elektrischen Antriebssystem versehen, das ein elektrisches Fahrantriebsaggregat umfasst. Das Fahrantriebsaggregat weist eine Energieversorgungseinheit auf, die von einem Verbrennungsmotor 8, z.B. einem Dieselmotor, und einem mit dem Verbrennungsmotor 8 verbundenen und angetriebenen Synchrongenerator 9 gebildet ist.

Die von dem Synchrongenerator 9 erzeugte elektrische Energie wird über einen Gleichrichter 11 der in einem Gehäuse 12 integrierten Leistungselektronik 10 zugeführt, mittels der mindestens ein in oder an einer Antriebsachse 14 angeordneten elektrischer Fahrantriebsmotor 13, beispielsweise ein Asynchrondrehstrommotor, mit elektrischer Energie versorgt wird.

Der Fahrantriebsmotor 13 steht unter Zwischenschaltung eines Differentialgetriebes 31 und zweier Untersetzungsgetriebe 30 mit den Antriebsrädern 3 in Verbindung. Anstelle einer derartigen Einmotorachse, bei der ein Fahrantriebsmotor 13 beide Antriebsräder 3 antreibt, kann auch eine Zweimotorachse vorgesehen werden, bei der jeweils ein Fahrantriebsmotor unter Zwischenschaltung eines Untersetzungsgetriebes mit dem entsprechenden Antriebsrad 3 in Verbindung steht.

Der Verbrennungsmotor 8, der Generator 9 sowie das Gehäuse 12 und die Antriebsachse 14 sind hierbei zusammen mit weiteren nicht mehr dargestellten Komponenten in einem Aggregateraum 33 des Flurförderzeugs 1 angeordnet.

Der Verbrennungsmotor 8 ist mit einer Flüssigkeitskühlung versehen. Die Flüssigkeitskühlung weist einen beispielsweise im Bereich des Gegengewichts 7 angeordneten Wärmetauscher 15 auf, der mit dem Verbrennungsmotor 8 in Kühlkreisläufen 16 verbunden ist. Der Wärmetauscher 15 wird mit Hilfe eines Kühllüfters 20 von Luft durchströmt, um die von der Kühlflüssigkeit an die Umgebungsluft abgebbare Wärmemenge zu erhöhen.

Mit der Leistungselektronik 12 ist der elektrische Energiespeicher 17 verbunden. Das Flurförderzeug 1 ist ein Hybridfahrzeug, bei dem beim Bremsen über den Fahrantriebsmotor 13 Strom erzeugt wird, der in dem elektrischen Energiespeicher 17 gespeichert wird und z.B. bei großem Leistungsbedarf zusätzlich zu dem durch den Verbrennungsmotor 8 und den Synchrongenerator 9 erzeugten Strom dem Fahrantriebsmotor 13 über die Leistungselektronik 10 zugeführt wird. Dadurch kann der Verbrennungsmotor 8 kleiner ausgelegt werden und dennoch eine große Leistung z.B. beim kurzzeitigen Beschleunigen des Flurförderzeugs 1 erreicht werden.

Fig. 2 zeigt schematisch den Aufbau des Antriebssystems des Flurförderzeugs 1 aus der Fig. 1. Der Verbrennungsmotor 8 treibt den als Synchrongenerator ausgebildeten Generator 9 an. Der von dem Generator 9 erzeugte Drehstrom wird in dem Gleichrichter 11 gleichgerichtet und der in dem Gehäuse 12 angeordneten Leistungselektronik 10 zugeführt. Ein Wechselrichter 18 als erster Umrichter 19 bildet aus der Gleichspannung des als Gleichspannungs-Zwischenkreis ausgebildeten Zwischenkreises 21 dreiphasigen Drehstrom variabler Frequenz, mit dem der Fahrantriebsmotor 13 gespeist wird, der über das Differentialgetriebe 31 die Antriebsräder 3 antreibt. Ein im Gehäuse 12 angeordneter Kondensator 22 dient als Eingangsfilter, der gleichzeitig auch den Eingangsfilter eines Gleichspannungswandlers 23 bildet, der als zweiter Umrichter 24 bzw. Steller in das Gehäuse 12 integriert ist und den elektrischen Energiespeicher 17 anschließt.

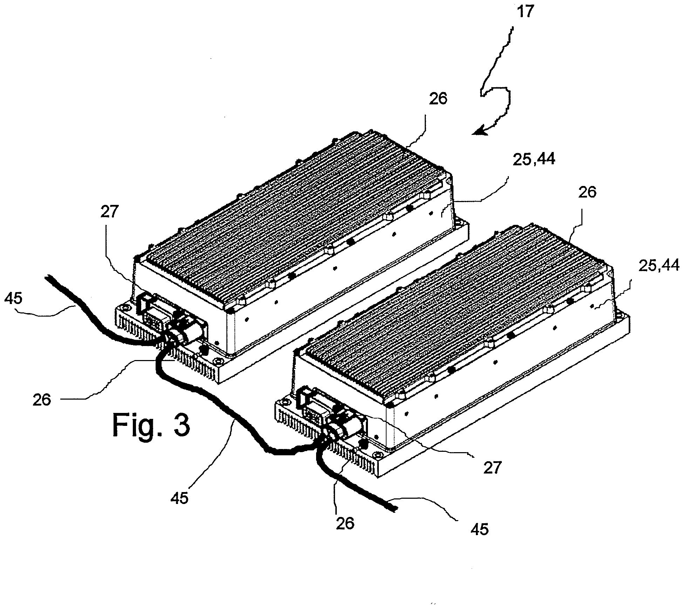

Die Fig. 3 zeigt in perspektivischer Ansicht einen elektrischen Energiespeicher 17, der aus mehreren, im dargestellten Ausführungsbeispiel aus zwei in Reihe geschalteten Modulen 44 gebildet ist. In einem Gehäuse 25 sind alle beschriebenen Komponenten und Bestandteile eines Moduls 44 zusammengefasst, insbesondere auch der Controller und der Datenbus-Controller. Das Gehäuse 25 weist an seiner Oberseite wie auch Unterseite Kühlrippen 26 auf. Die Kühlleistung kann durch eine integrierte Kühlung, etwa einen Lüfter oder auch einen Wärmetauscher mit einer Flüssigkeitskühlung erhöht werden, wobei z.B. der Lüfter oder der Wärmetauscher ebenfalls in das Gehäuse integriert werden können. An der Vorderseite weist das Gehäuse 25 jedes Moduls 44 Anschlüsse 27 für einen CAN-Bus, die Leistungsanschlüsse und deren Leitungen 45 auf, mit denen die Module 44 in Reihe geschaltet verbunden sind.

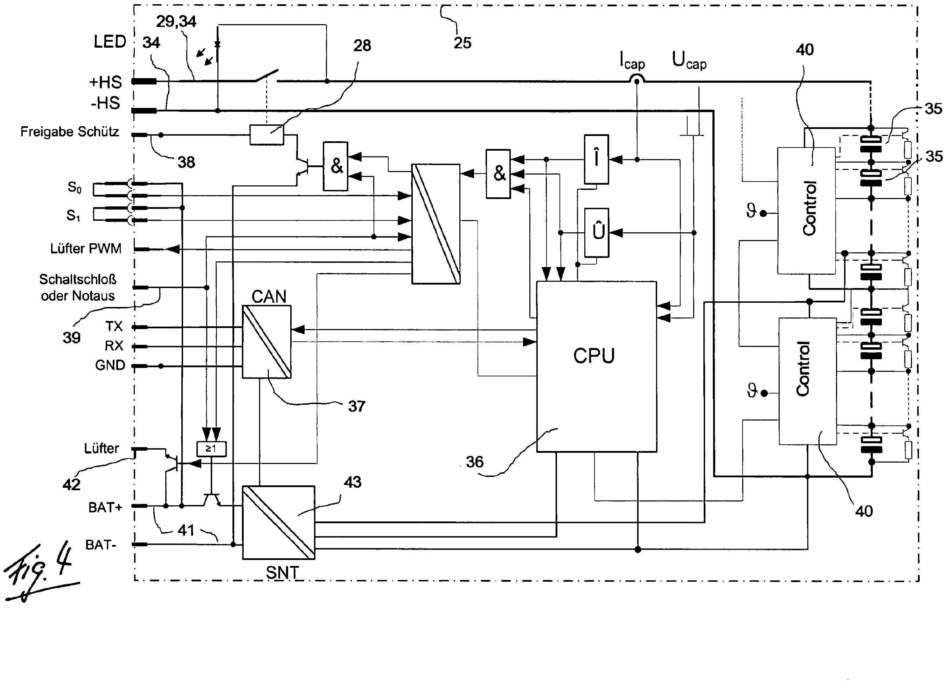

Die Fig. 4 zeigt ein Schaltbild eines Moduls 44 der Fig. 3. Ein Schütz 28 kann die Plusleitung 29 von Leistungsanschlüssen 34 unterbrechen. Einheiten von Ultrakondensatoren 35 sind in Reihe geschaltet. Temperaturen der Ultrakondensatoren 35 werden einem Controller 36 zugeführt, der über einen CAN-Datenbustransceiver 37 mit einer Fahrzeugsteuerung verbunden ist und Informationen über den Betriebszustand des elektrischen Energiespeichers 17 bzw. der Module 44 mit dieser austauschen kann. Über eine Signalleitung 38 kann das Schütz 28 von einem Schaltschloss bzw. Zündschloss oder einem Notausschalter freigegeben werden, so dass das Schütz 28 nur einschalten kann, wenn dieses Signal vorliegt. Daneben kann über eine weitere Datenleitung 39 eine Betätigung des Schütz 28 durch das Schaltschloss oder den Notausschalter erfolgen. Es ist natürlich auch möglich, die Funktionen der Freigabe und des Schaltens des Schütz 28 nur über eine Datenleitung umzusetzen. Das Modul 44 ist weiterhin mit einer Gesamtspannungsmessung U_{cap} und einer Strommessung I_{cap} durch den Controller 36 versehen. Zur Temperaturüberwachung des Moduls 44 sind mehrere Temperaturensensoren 40 vorgesehen, die mit dem Controller 36 in Verbindung stehen, und gleichmäßig im Modul 44 verteilt sind. Zur Spannungsversorgung sind der Controller 36 und der CAN-Datenbustransceiver 37 mit einem Niederspannungsanschluss 41 versehen, der den Anschluss eines Schaltnetzteils 43 an die Fahrzeugbatterie des Fahrzeugs ermöglicht. Um ein Entladen der Fahrzeugbatterie zu vermeiden, kann von dem Controller 36 das Schaltnetzteil 43 ausgeschaltet werden. Das Modul 44 ist weiterhin mit einem Anschluss 42 für einen Lüfter zur äußeren Kühlung des Moduls 44 versehen. Um bei abgestelltem Fahrzeug die Temperatur überwachen zu können, ist das Modul 44 mit einer Nachlauffunktion zur Überwachung der Temperatursensoren 40 versehen und zur gegebenenfalls notwendigen Ansteuerung des an den Anschluss 42 angeschlossenen Lüfters. Der Controller 36 kann weiterhin die Ausgleichsschaltung jedes Ultrakondensators 34 zu- oder abschalten. Dadurch können beliebige Betriebsstrategien gefahren werden, die der Symmetrierung und der Sicherstellung einer gleichmäßigen Alterung der Ultrakondensatoren 34 dient.

Bei dem Modul 44 ist der von den Bauteilen in der Figur 4 links der Ultrakondensatoren 34 gebildete Steuerkreis mit der Überwachungsschaltung durch potential-trennende Kopplungselemente und das Schaltnetzteil 43 vom Fahrzeug-Bordnetz potential getrennt aufgebaut.

Alle beschriebenen Bauteile und Elemente, insbesondere die Schutzeinrichtungen für Temperatur, Spannung und Strom, sind in dem Gehäuse 25 des Moduls 44 zusammengefasst.

Das Modul 44 ermöglicht durch das integrierte Schütz 28, dass der Energiespeicher 17 bei Kurzschlüssen und/oder Grenzwerten überschreitenden Spannungen oder Strömen durch eine Zwangsöffnung des Schütz 28 von dem Fahrzeugantriebsstrang getrennt werden kann.

Es können mehrere beschriebene Module 44 in Reihe oder parallel eingesetzt werden, um eine Anpassung an geforderte Spannungen und Stromleistungen zu erreichen. Es ergibt sich bei dem erfindungsgemäßen elektrischen Energiespeicher 17, bestehend aus mehreren Modulen 44, ein kompakter Gesamtaufbau und eine gute Handhabbarkeit für Servicepersonal sowie im Reparaturfall. Das Modul 44 hat die Fähigkeit zur Eigendiagnose und ist einfach in ein Fahrzeugsystem zu integrieren.

Durch Kodierungsbrücken, die im Kabelsatz integriert werden können, ist es bei dem beschriebenen Ausführungsbeispiel möglich, bis zu vier identisch ausgeführte Module 44 in Reihe zu schalten. Dabei sind in den Anschlusssteckern des Kabelsatzes Verbindungsbrücken zwischen Steckeranschlüssen integriert, die z.B. bei vier Steckern des Kabelsatzes für vier Module 44 mit unterschiedlichen Kabelbrücken belegt sind, so dass für die vier Module voneinander abweichende Verbindungen zwischen Pins der Stecker geschaltet sind. Obwohl die Module 44 vollständig identisch ausgeführt sind, kann durch die Kabelbrücken eindeutig ein Modul identifiziert werden. Durch die Kabelbrücken ist es im verbauten Zustand möglich, die Fehlermeldungen einzelnen elektrischen Energiespeichern genau zuzuordnen, so dass z.B. ein Servicetechniker genau erkennen kann, welches Modul 44 im Fehlerfall betroffen ist. Dabei sind die einzelnen Module 44 vollständig identisch und werden nur durch das Anstecken an dem jeweiligen Stecker individualisiert und identifiziert. Abhängig von der Methode der Kodierung können auch mehr als vier Module zusammengeschaltet werden. Es können identische Module 44 für unterschiedliche Flurförderzeuge 1 innerhalb eines Systems im Sinne eines Baukastensystems eingesetzt werden.

## Patentansprüche

1. Fahrzeug mit einem zumindest auch elektrischem Antrieb, insbesondere Hybridantrieb, mit einem elektrischen Energiespeicher (17) der eine Mehrzahl von Ultrakondensatoren (35) aufweist, die als ein Modul (44) in ein Gehäuse (25) integriert sind,
**dadurch gekennzeichnet,**
**dass** der elektrische Energiespeicher (17) aus einer Mehrzahl von Modulen (44) gebildet ist, die parallel oder in Reihe geschaltet sind.

2. Fahrzeug nach Anspruch 1,
**dadurch gekennzeichnet,**
**dass** das Fahrzeug eine mobile Arbeitsmaschine, insbesondere ein Flurförderzeug, (1) ist.

3. Fahrzeug nach Anspruch 1 oder 2,
**dadurch gekennzeichnet,**
**dass** jedes Modul (44) eine Kodierung aufweist, insbesondere keine, eine oder zwei Kodierungsbrücken, die in dem Kabelsatz der Anschlusskabel integriert sind.

4. Fahrzeug nach einem der Ansprüche 1 bis 3,
**dadurch gekennzeichnet,**
**dass** jedes Modul (44) ein Schütz (28) bzw. Schalter aufweist, der über eine Steuerleitung (38, 39) und/oder ein Steuersignal geschaltet werden kann und einen Leistungsanschluss (34) des Moduls trennen kann.

5. Fahrzeug nach einem der Ansprüche 1 bis 4,
**dadurch gekennzeichnet,**
**dass** jedes Modul (44) einen Controller (36) enthält, der Funktionsparameter der Ultrakondensatoren (35) wie Temperatur und/oder Spannung und/oder Ströme erfasst.

6. Fahrzeug nach einem der Ansprüche 1 bis 5,
**dadurch gekennzeichnet,**
**dass** der Controller (36) bei erfassten Kurzschlüssen und/oder Überschreiten von zulässigen Grenzwerten für Temperatur und/oder Spannung und/oder Ströme der Ultrakondensatoren (35) das Modul (44) abschalten kann.

7. Fahrzeug nach einem der Ansprüche 1 bis 6,
**dadurch gekennzeichnet,**
**dass** in jedes Modul (44) ein Datenbus-Transceiver (37) sowie ein Bus-Controller" insbesondere ein CAN-Bus-Controller" integriert ist und über diesen Funktionsparameter ausgelesen sowie Steuerbefehle empfangen werden können und/oder eine Kodierung des Moduls (44) erfolgen kann.

8. Fahrzeug nach einem der Ansprüche 1 bis 7,
**dadurch gekennzeichnet,**
**dass** die Ultrakondensatoren (35) Doppelschichtkondensatoren sind.

9. System aus mindestens zwei Fahrzeugen nach einem der Ansprüche 1 bis 8, **dadurch gekennzeichnet,**
**dass** die Fahrzeuge unterschiedlich sind hinsichtlich der Leistungsanforderungen an den elektrischen Energiespeicher (17) und der elektrische Energiespeicher (17) eine von der erforderlichen Leistung abhängige Anzahl von Modulen (44) aufweist.

10. System nach Anspruch 9,
**dadurch gekennzeichnet,**
**dass** die Fahrzeuge Flurförderzeuge (1), insbesondere Gegengewichtsgabelstapler, sind, die sich in dem Leergewicht und zulässigen Lastgewicht unterscheiden.
